# EUROPEAN PATENT SPECIFICATION

(11) **EP 3 217 202 B1**
(45) Date of publication and mention of the grant of the patent: **15.07.2020**
(21) Application number: 17156194.7
(22) Date of filing: 15.02.2017
(51) Int. Cl.: G02B 7/04, G02B 27/64

(54) **LENS BARREL**
OBJEKTIVTUBUS
BARILLET

(30) Priority: 11.03.2016 JP 2016047870
(43) Date of publication of application: 13.09.2017
(73) Proprietor: Konica Minolta, Inc., Tokyo 100-7015 (JP)
(72) Inventor: HOSHINA, Masahiko, Tokyo, Tokyo 100-7015 (JP)
(74) Representative: Gille Hrabal

(56) References cited:
- JP-A- 2007 264 175
- JP-A- 2008 191 609
- JP-A- 2016 033 569

## Description

### TECHNICAL FIELD

The present invention relates to a lens barrel.

### BACKGROUND ART

In recent years, an imaging lens for a digital camera has been used for not only still-image taking but also moving-image taking. In moving-image taking, a reduction in lens driving noise is required to prevent the drive noise from being recorded by a microphone.

For example, an optical apparatus disclosed in JP 5072787 B (Literature 1) is configured to suppress noise having a specific frequency, which would otherwise be caused by vibration propagated to a barrel body through a guide shaft supporting a movable lens holding member. More specifically, the optical apparatus disclosed in the Literature 1 includes: a barrel body; a guide shaft held by the barrel body, a movable lens holding member supported by the guide shaft, in such a manner as to be movable along the guide shaft while holding a lens; and a damping member, wherein the barrel body includes a focus base member holding the guide shaft, and a fixed tube coupled to the focus base member. The damping member is installed between the focus base member and the fixed tube, so that vibration which would otherwise be propagated from the focus base member to the fixed tube in the barrel body through the guide shaft is suppressed or damped, and thus generation of noise is suppressed.

Meanwhile, noise is also generated due to a collision between the movable lens holding member and the guide shaft caused by vibration of the guide shaft with respect to the movable lens holding member occurring during movement of the movable lens holding member along the guide shaft.

Such vibration of the guide shaft with respect to the movable lens holding member is hardly suppressed by the optical apparatus disclosed in the Literature 1, although it can suppress vibration which would otherwise be propagated from the focus base member to the fixed tube.

Therefore, there is a problem that it is difficult to suppress noise due to the collision between the movable lens holding member and the guide shaft caused by vibration of the guide shaft with respect to the movable lens holding member.

JP 2008 191609 A, JP 2007 264175 A and JP 2016 033569 A all disclose a lens barrel comprising a barrel body; a first guide shaft held by the barrel body; a movable lens holding member having a supported portion supported by the first guide shaft in such a manner as to be movable along the first guide shaft while holding at least one lens.

### SUMMARY OF INVENTION

The present invention has been made in view of the above circumstance, and an object thereof is to provide a lens barrel capable of suppressing noise due to a collision between a movable lens holding member and a guide shaft caused by vibration of the guide shaft with respect to the movable lens holding member.

In order to achieve this object, a lens barrel of the present invention includes the features of the independent claim. Further embodiments are subject-matter of the dependent claims.

These and other objects, features and advantages of the present invention will become more apparent upon reading the following detailed description along with the accompanying drawings.

### BRIEF DESCRIPTION OF DRAWINGS

FIG. 1 is a sectional view depicting a lens barrel according to one embodiment of the present invention.
FIG. 2 is a sectional view taken along the line II-II in FIG. 1.
FIG. 3 is a sectional view taken along the line III-III in FIG. 1,
FIG. 4 is a perspective view depicting an assembly of a movable lens holding member, a first guide shaft, a second guide shaft and a first damping member each used in the lens barrel depicted in FIG. 1.
FIG. 5 is a side view of the assembly in FIG. 4.
FIG. 6 is a front view of the assembly in FIG. 4.
FIG. 7 is a back view of the assembly in FIG. 4.
FIG. 8 is a sectional view taken along the line VIII-VIII in FIG. 5.
FIG. 9 is a sectional view taken along the line IX-IX in FIG. 6.
FIG. 10 is a sectional view taken along the line X-X in FIG. 6.
FIG. 11 is a sectional view taken along the line XI-XI in FIG. 7.
FIG. 12 is a sectional view taken along the line XII-XII in FIG. 11.
FIG. 13 is a sectional view taken along the line XIII-XIII in FIG. 5.
FIG. 14 is a sectional view depicting a substantial part of a lens barrel according to another embodiment of the present invention.
FIG. 15 is a sectional view for explaining the another embodiment depicted in FIG. 14.

### DESCRIPTION OF EMBODIMENTS

Based on the drawings, one embodiment of the present invention will now be described. It should be noted that elements or components assigned with the same reference sign in the figures means that they are identical, and therefore duplicated description thereof will be omitted appropriately. In this specification, for a generic term, a reference sign without any suffix is assigned thereto, and, for a term meaning an individual element or component, a reference sign with a suffix is assigned thereto.

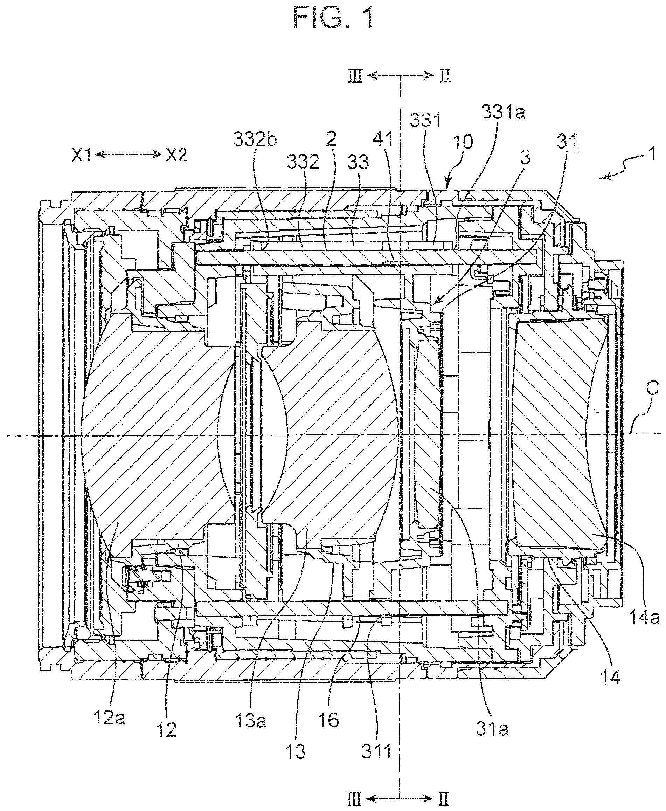

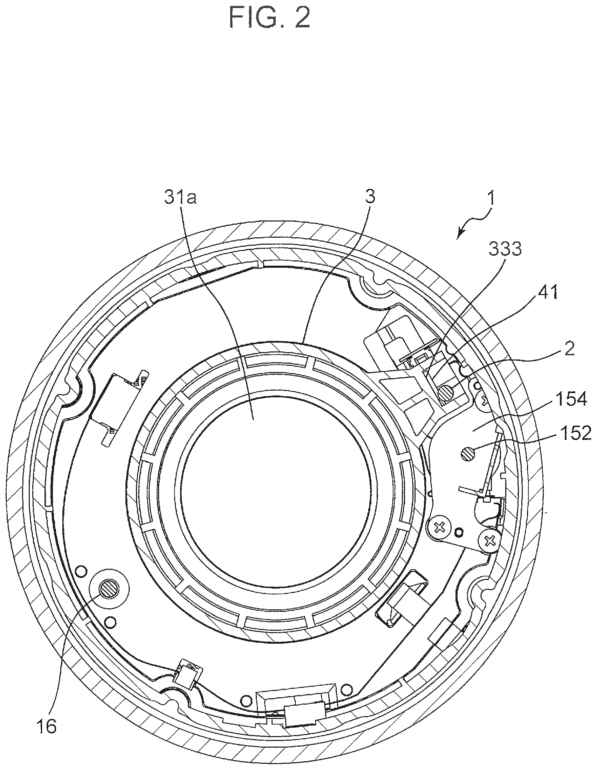

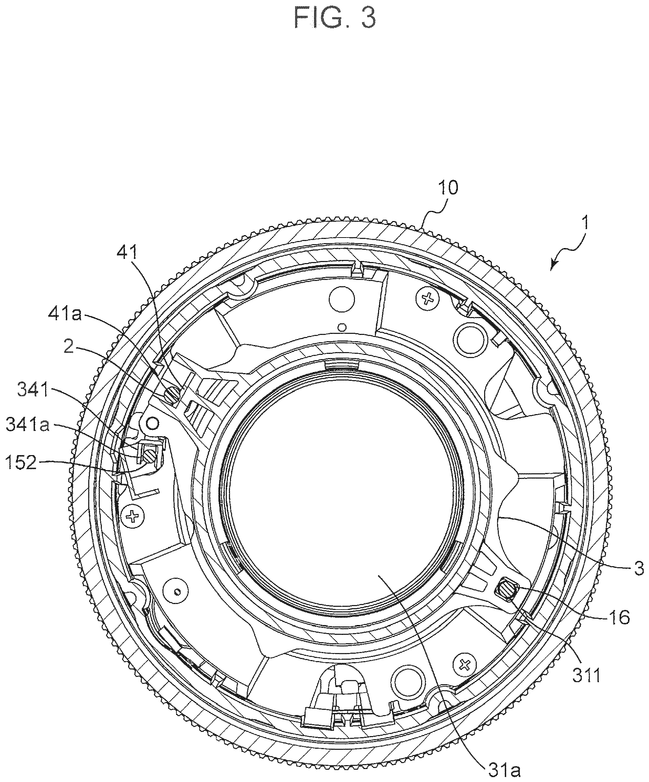

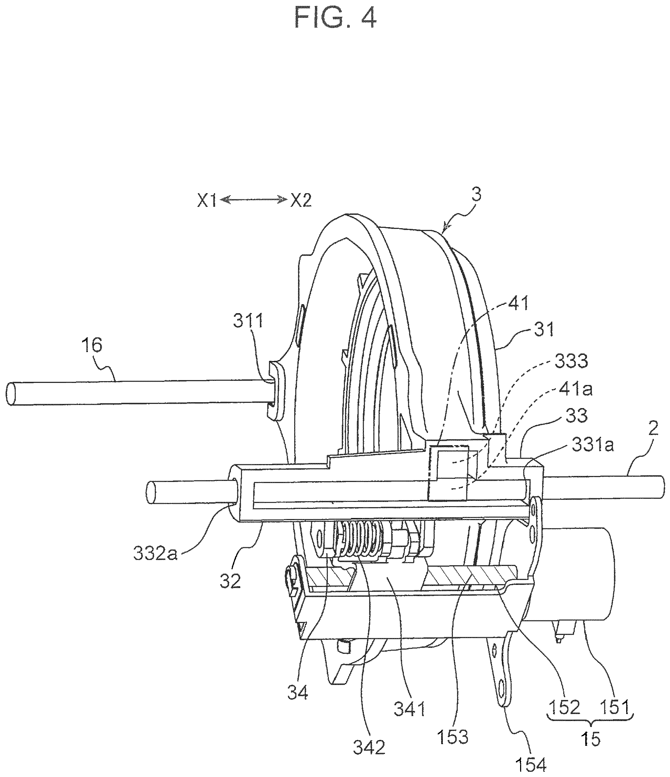

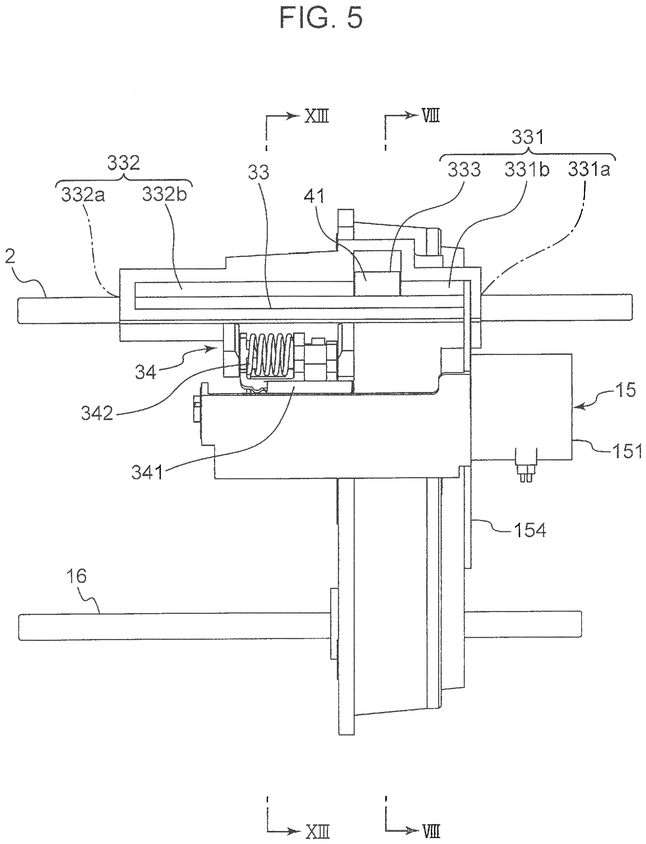

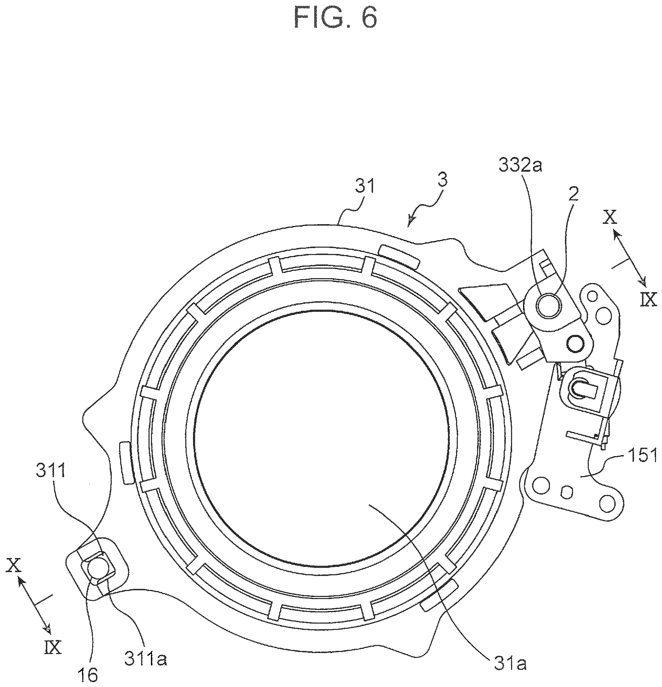

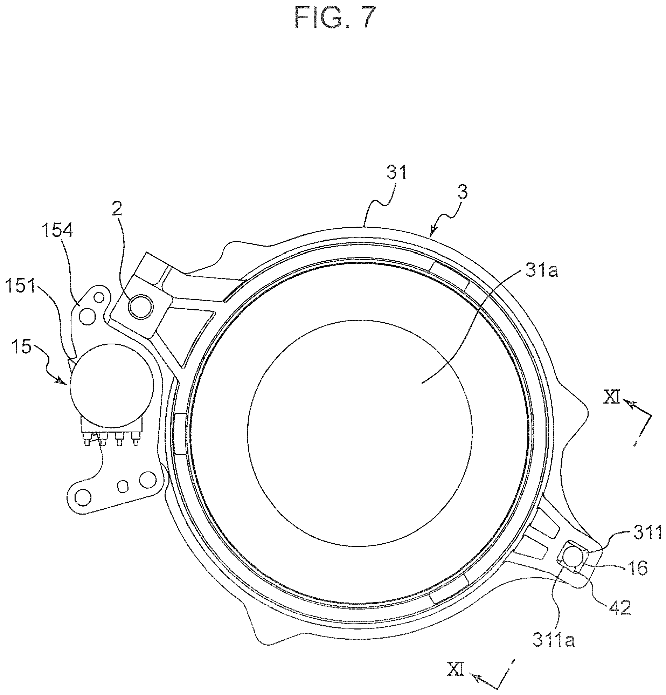

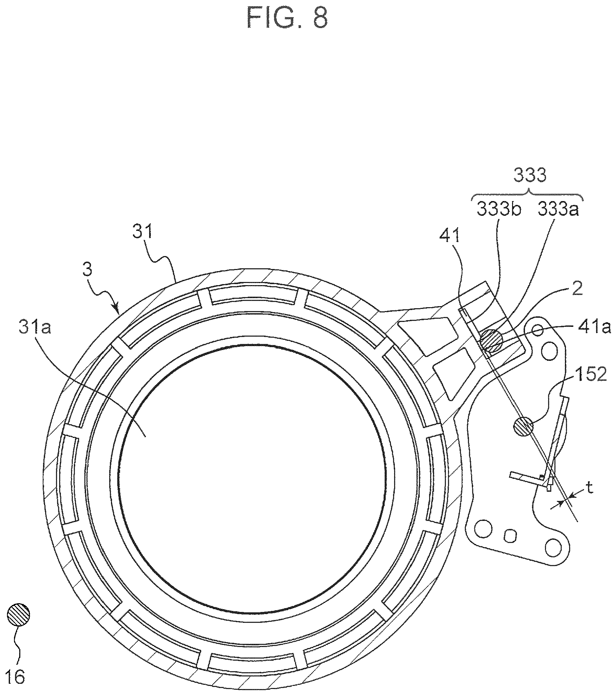

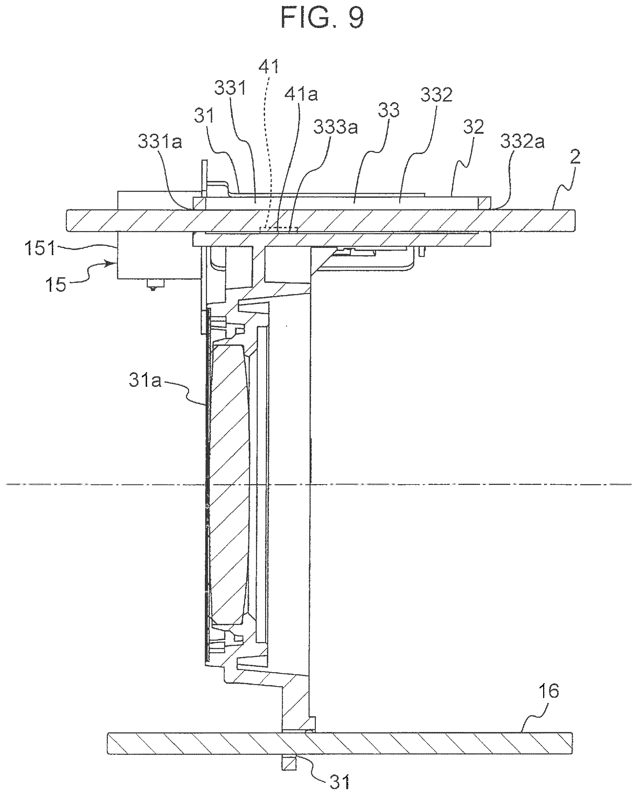

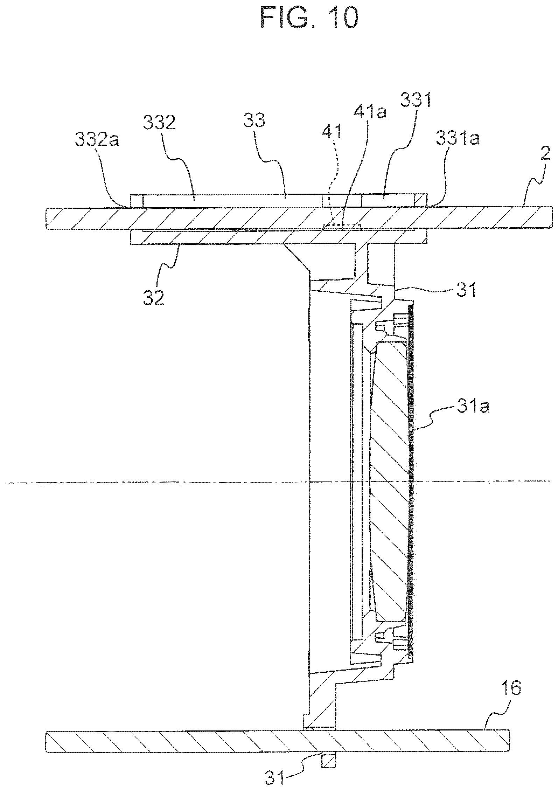

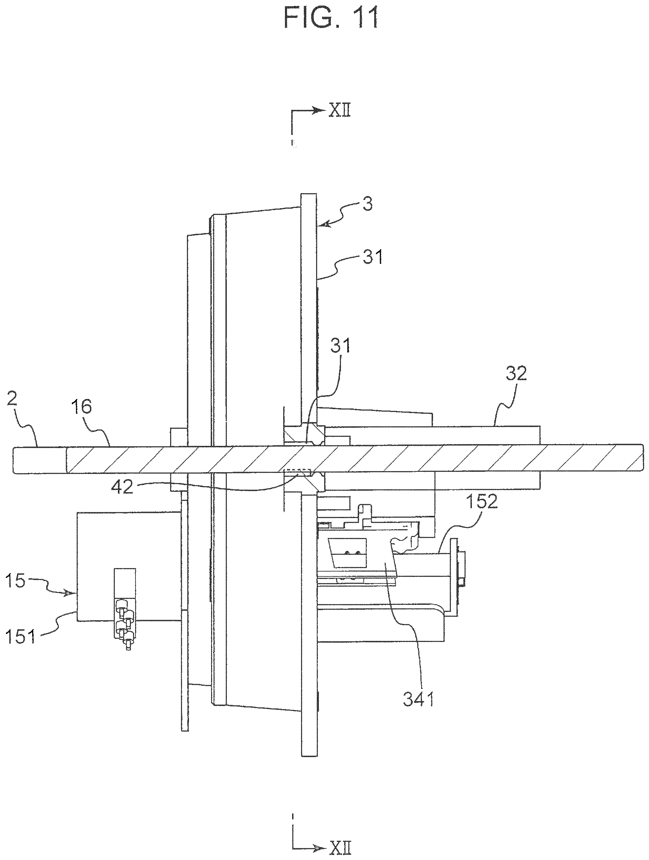

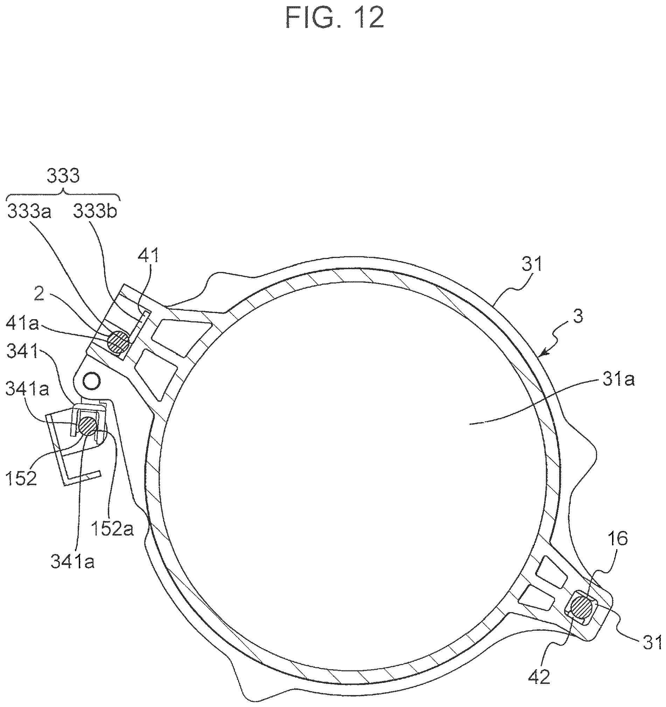

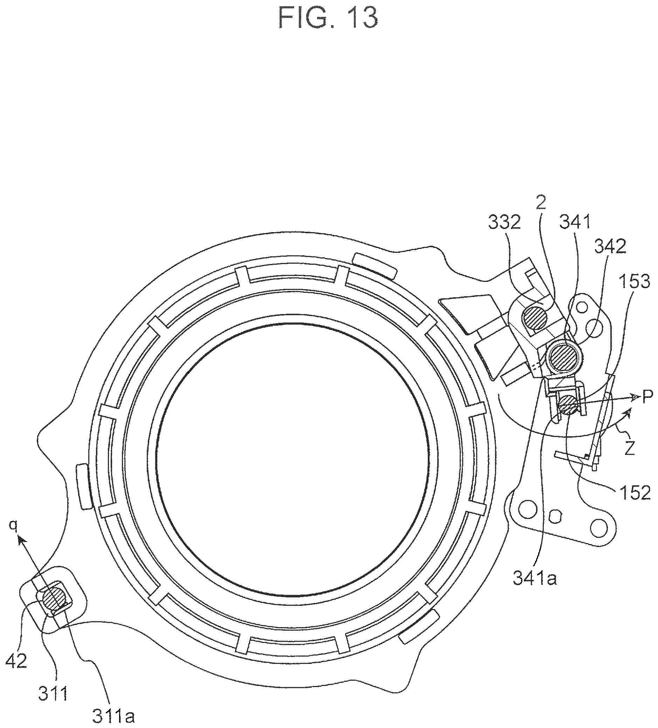

FIG. 1 is a sectional view depicting a lens barrel according to this embodiment. FIG. 2 is a sectional view taken along the line II-II in FIG. 1, and FIG. 3 is a sectional view taken along the line III-III in FIG. 1. FIG. 4 is a perspective view depicting an assembly of a movable lens holding member, a first guide shaft, a second guide shaft and a first damping member each used in the lens barrel depicted in FIG. 1. FIG. 5, FIG. 6 and FIG. 7 are, respectively, a side view, a front view and a back view of the assembly in FIG. 4. FIG. 8 is a sectional view taken along the line VIII-VIII in FIG. 5. FIG. 9 is a sectional view taken along the line IX-IX in FIG. 6, and FIG. 10 is a sectional view taken along the line X-X in FIG. 6. FIG. 11 is a sectional view taken along the line XI-XI in FIG. 7, and FIG. 12 is a sectional view taken along the line XII-XII in FIG. 11. FIG. 13 is a sectional view taken along the line XIII-XIII in FIG. 5. In FIG. 1, a direction toward an object is denoted as X1, and a direction toward an image is denoted as X2, for the sake of explanation.

As depicted in FIG. 1, a lens barrel 1 according to this embodiment includes: a barrel body 10; a first guide shaft 2 held by the barrel body 10; a movable lens holding member 3 movably supported by the first shaft 2; and a first damping member 41 (which is depicted in FIGS. 2 and 3) for damping vibration of the first guide shaft 2 with respect to the movable lens holding member 3 occurring during movement of the movable lens holding member 3 along the first guide shaft 2.

The barrel body 10 is internally provided with a plurality of stationary lens holding members 12, 13, 14 each fixedly held, and a motor (actuator, see FIG. 4) 15 for driving the movable lens holding member.

In this embodiment, the stationary lens holding members consist of a first stationary lens holding member 12, a second stationary lens holding member 13 and a third stationary lens holding member 14, which are arranged in this order in a direction from an object side (the X1 side) toward an image side (the X2 side). The first stationary lens holding member 12, the second stationary lens holding member 13 and the third stationary lens holding member 14 hold, respectively, at least one lens 12a, at least one lens 13a and at least one lens 14a. Thus, the lens barrel 1 is formed such that an optical axis C of the lenses 12a, 13a, 14a is coincident with an axis of the barrel body 10.

As depicted in FIG. 4, the motor 15 includes a motor body 151, and a rotary shaft 152 extending from the motor body 151. The rotary shaft 152 has a lead groove 153 spirally formed on an outer peripheral surface thereof. The motor 15 is installed such that the rotary shaft 152 is disposed to extend along the direction of the optical axis C, and, in this state, the motor body 151 is fixedly attached to a part of the barrel body 10 through a bracket 154.

The barrel body 10 constructed as above is configured such that an image side thereof is detachably attached to a camera body or the like, as depicted in FIG. 1. This enables the lens barrel 1 to be attached to a camera body or the like.

The first guide shaft 2 is a cross-sectionally circular (columnar)-shaped member having a given length. As depicted in FIGS. 4 to 8, the first guide shaft 2 is disposed inside the barrel body 10 at a position adjacent to the motor 15 in a circumferential direction of the barrel body 10, in such a manner that a longitudinal direction of the first guide shaft 2 extends along the optical axis C as depicted in FIG. 1, and, in this state, opposite ends of the first guide shaft 2 are fixedly held by the barrel body 10.

As depicted in FIGS. 1 to 13, the movable lens holding member 3 includes: a circular tubular-shaped movable lens holding member body 31; an extension portion 32 provided to protrudingly extend from the movable lens holding member body 31; a supported portion 33 supported by the first guide shaft 2; and an actuator coupling portion 34 coupling the movable lens holding member body 31 and the motor 15 together.

The movable lens holding member body 31 has a generally short-height circular tubular shape, and holds the at least one lens 31a (see FIG. 1) by an inner periphery thereof. The movable lens holding member body 31 has a second guide shaft-receiving section 311 which is provided in an outer periphery thereof at a position axially offset toward the object side, and rotationally stopped by a second guide shaft (anti-rotation member) 16 provided in the barrel body 10.

More specifically, the barrel body 10 is provided with a cross-sectionally circular-shaped second guide shaft 16 fixedly disposed approximately parallel to the first guide axis 2. On the other hand, the movable lens holding member body 31 has a second guide shaft-receiving section 311 provided in an outer periphery thereof and formed as a penetration hole through which the second guide shaft 16 movably penetrates. The second guide shaft 16 movably penetrates through the second guide shaft-receiving section 311, so that a rotational movement of the movable lens holding member 3 about the first guide shaft 2 is prevented. A second damping member 42 (which is illustrated in FIG. 7) is installed in the second guide shaft-receiving section 311. Details of the second damping member 42 will be described later.

Referring to FIGS. 4 to 8 again, the extension portion 32 is provided on the outer periphery of the movable lens holding member body 31 at a position away from the second guide shaft receiving-section 311 a circumferential direction of the movable lens holding member body 31 by about 180 degrees, to protrude from an object-side one of axially opposite edge faces of the movable lens holding member body 31 in one direction (toward the object side) by a given length.

In this embodiment, the supported portion 33 is formed in a region extending approximately from an image-side one of axially opposite ends of the outer periphery of the movable lens holding member body 31 to an object-side distal end of the extension portion 32, along the direction of the optical axis C. The supported portion 33 includes a first supported portion 331 formed in the movable lens holding member body 31, and a second supported portion 332 formed in the supported portion 33.

The first supported portion 331 has a first guide shaft-penetration hole 331a formed in the image-side end so as to allow the first guide shaft 2 to movably penetrate therethrough; a first guide shaft-receiving section 331b receiving therein the first guide shaft 2; and a first damping member-installation section 333 in which the first damping member 41 is installed. The first guide shaft-receiving section 331b is formed in a cross-sectionally approximately U shape which is opened on an outward side thereof in a radial direction of the movable lens holding member body 31, as with a shape of an aftermentioned first guide shaft-receiving section 332b of the second supported portion 332 (see FIG. 13). In this embodiment, the first damping member-installation section 333 is formed as a part of the first guide shaft-receiving section 331b to have a given width in the direction of the optical axis C. As depicted in FIG. 8, the first damping member-installation section 333 includes an opposed sub-section 333a opposed to the first guide shaft 2, and an installation operation sub-section 333b for enabling an operation of installing the first damping member 41 on the first damping member-installation section 333. The installation operation sub-section 333b is formed to extend from the opposed sub-section 333a in the circumferential direction of the movable lens holding member body 31. In this embodiment, the entire first damping member-installation section 333 extending from the opposed sub-section 333a to the installation operation sub-section 333b is formed in a planar shape.

As depicted in FIGS. 4 to 8, the second supported portion 332 has a first guide shaft-penetration hole 332a formed in the object-side end so as to allow the first guide shaft 2 to movably penetrate therethrough; and a first guide shaft-receiving section 332b receiving therein the first guide shaft 2. In this embodiment, the first guide shaft-receiving section 332b of the second supported portion 332 is formed in a cross-sectionally approximately U shape identical to that of the first guide shaft-receiving section 331b, to extend continuously from the first guide shaft-receiving section 331b, as depicted in FIG. 13.

Thus, by installing the first guide shaft 2 to penetrate through the first guide shaft-penetration hole 331a of the first supported portion 331 and the first guide shaft-penetration hole 332a of the second supported portion 332 each formed in the above manner, the first guide shaft 2 can support the movable lens holding member 3 movably therealong. In this state, the lens 31a held by the movable lens holding member 3 is disposed between the lens 13a held by the second stationary lens holding member 13 and the lens 14a held by the third stationary lens holding member 14.

In the state in which the first guide shaft 2 penetrates through the supported portion 33, a given gap t is formed between the first guide shaft 2, and each of a bottom surface of the first guide shaft-receiving section 331b of the first supported portion 331, a bottom surface of the first guide shaft-receiving section 332b of the second supported portion 332, and the first damping member-installation section 333 (see FIG. 8).

As depicted in FIG. 4, the actuator coupling portion 34 includes a rotary shaft engagement member 341 engaged with the rotary shaft 152 of the motor 15, and a biasing member 342 composed of a coil spring biasing the rotary shaft engagement member 341.

As depicted in FIG. 13, the rotary shaft engagement member 341 has an engagement piece 341a provided at a distal end thereof and movably engaged with the lead groove 153 of the rotary shaft 152, and an attaching shaft provided at an opposite, base, end thereof. The attaching shaft is pivotally attached to the movable lens holding member body 31, so that the rotary shaft engagement member 341 is rotationally movable about the attaching shaft. The biasing member 342 biases the rotary shaft engagement member 341 movably engaged with the lead groove 153 of the rotary shaft 152, in one direction (counterclockwise direction Z in FIG. 13) about the attaching shaft. Thus, the engagement piece 341a biases the lead groove 153 of the rotary shaft 152 in a direction p, and an inner wall surface of the second guide shaft-receiving section 311 biases the second guide shaft 16 in a direction q, as depicted in FIG. 13.

In this embodiment, the first damping member 41 is formed of a porous material having elasticity, such as sponge. The first damping member 41 is formed in a rectangular shape fittable into the first damping member-installation section 333 and having a thickness greater than the gap t between the first guide shaft 2 and the first damping member-installation section 333. The first damping member 41 includes a contact portion 41a in contact with the first guide shaft 2, on one of opposite sides in a thickness direction thereof. The contact portion 41a is formed in a planar shape in a state before contact with the first guide shaft 2. In this embodiment, the first damping member 41 is formed as a generally plate-like member which has a thickness greater than the gap t in the state before contact with the first guide shaft 2 (in a state before assembling or installation).

The first damping member 41 is installed in the entire region from the opposed sub-section 333a to the installation operation sub-section 333b in the first damping member-installation section 333, wherein the contact portion 41a is in contact with the first guide shaft 2. In this embodiment, the first damping member 41 is fixedly bonded to the first damping member-installation section 333 by an adhesive.

Next, the second damping member 42 will be described. The second damping member 42 is a member for damping vibration of the second guide shaft 16 with respect to the second guide shaft-receiving section 311. In this embodiment, the second damping member 42 is formed using the same material as that of the first damping member 41.

The second damping member 42 is installed between the second guide shaft 16 and the inner wall surface of the second guide shaft-receiving section 311. In this embodiment, the second damping member 42 is installed between the second guide shaft 2 and a region 311a of the inner wall surface of the second guide shaft-receiving section 311, wherein the inner wall surface region 311a is oriented in a direction orthogonal to a line connecting the first guide shaft 2 and the second guide shaft 16, and biased toward the second guide shaft 16 by the biasing member 342.

Next, an operation of the lens barrel 1 according to this embodiment will be described. Upon activation of the motor 15, the rotary shaft 152 is rotated in a clockwise or counterclockwise direction. Along with the rotation of the rotary shaft 152, the rotary shaft engagement member 341 of the actuator coupling portion 34 of the movable lens holding member 3 is fed in an axial direction of the rotary shaft 152, i.e., in the direction of the optical axis C, according to the lead groove 153. Thus, the supported portion 33 of the movable lens holding member 3 is moved along the first guide shaft 2 in the direction of the optical axis C (in the direction X1 or X2).

The first damping member 41 is installed between the supported portion 33 and the first guide shaft 2 in such a manner as to be pressed against the first guide shaft 2. Therefore, during the movement of the movable lens holding member 3, vibration of the first guide shaft 2 with respect to the supported portion 33 is damped. This makes it possible to suppress noise due to a collision between the first guide shaft 2 and the supported portion 33.

In addition, the first damping member 41 is installed in the first supported portion 331 formed in the outer periphery of the movable lens holding member body 31, so that it is possible to efficiently damp vibration of the first guide shaft 2. More specifically, the movable lens holding member body 31 holding the lens 31a has a weight greater than the extension portion 32. Thus, the first guide shaft 2 receives a larger load from the first supported portion 331 than that from the second supported portion 332, so that, during the movement of the movable lens holding member 3, vibration is more likely to occur in the first supported portion 331 as compared to the second supported portion 332. Therefore, in this embodiment, the first damping member 41 is installed in the first supported portion 331. This makes it possible to efficiently damp vibration of the first guide shaft 2 to thereby more efficiently suppress noise due to a collision between the movable lens holding member 3 and the first guide shaft 2 caused by the vibration of the first guide shaft 2.

In this embodiment, the contact portion 41a of the first damping member 41 is formed in a planar shape in the state before contact with the first guide shaft 2, so that it is possible to reduce a contact area with the first guide shaft 2, and thus keep down frictional resistance during movement of the movable lens holding member 3 along the first guide shaft 2, thereby enabling the movable lens holding member 3 to be smoothly moved along the first guide shaft 2.

In this embodiment, the first damper member 41 is formed of a porous material having elasticity, so that it is possible to keep down frictional resistance during movement of the movable lens holding member 3 along the first guide shaft 2.

In this embodiment, the second damping member 42 is installed between the second guide shaft 16 and the inner wall surface of the second guide shaft-receiving section 311, so that it is possible to damp vibration of the second guide shaft 16 with respect to the second guide shaft-receiving section 311, and thus suppress noise due to a collision between the second guide shaft-receiving section 311 and the second guide shaft 16 caused by vibration of the second guide shaft 16.

In this embodiment, the second damping member 42 is installed between the second guide shaft 16 and the inner wall surface of the second guide shaft-receiving section 311 oriented in a direction orthogonal to a line connecting the first guide shaft 2 and the second guide shaft 16, so that it is possible to more efficiently suppress noise due to the collision between the second guide shaft-receiving section 311 and the second guide shaft 16.

In this embodiment, the second damper member 42 is formed of a porous material having elasticity, so that it is possible to keep down frictional resistance between the second damper member 42 and the second guide shaft 16 during movement of the movable lens holding member 3.

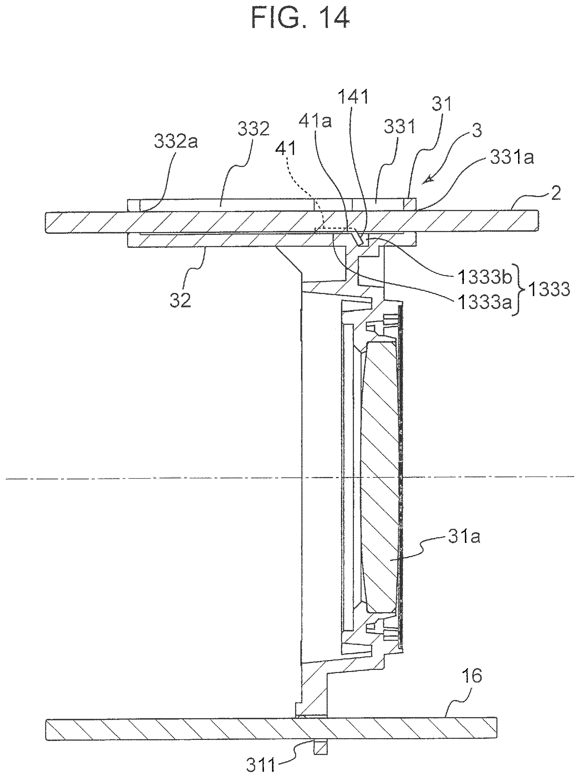

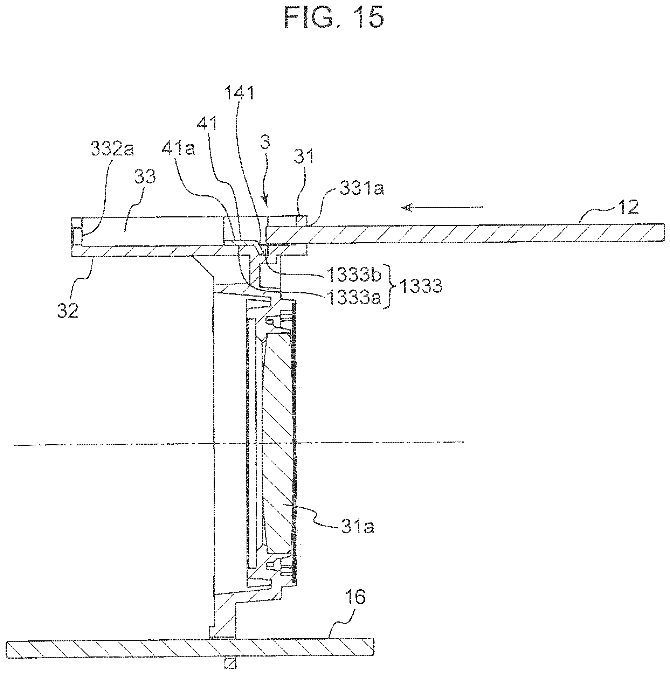

Although the above embodiment has been described based on one example where the first damping member-installation section 333 is entirely formed in a planar shape, the shape is not limited thereto, but may be appropriately modified. For example, as depicted in FIGS. 14 and 15, a first damping member-installation section 1333 includes: a first installation sub-section 1333a extending along the first guide shaft 2 (in the direction of the optical axis C) in opposed relation to the first guide shaft 2; and a second installation sub-section 1333b formed between the first installation sub-section 1333a and the first guide shaft-penetration hole 331a of the first supported portion 331 to extend from the first installation sub-section 1333a along the first guide shaft 2. The second installation sub-section 1333b is formed in a depressed state with respect to the first installation sub-section 1333a so as to receive therein an end 141 of the first damping member 41.

In this modified embodiment, the end 141 of the first damping member 41 is received in the second installation sub-section 1333b. Thus, for example, as depicted in FIG. 15, during operation of installing the first guide shaft 2 to penetrate through the first guide shaft-penetration hole 331a and further through the first guide shaft-penetration hole 332a of the second supported portion 332, it is possible to prevent a leading end of the first guide shaft 2 from getting stuck with the end 141 of the first damping member 41 and thereby causing difficulty in installation, and thus facilitate smooth installation.

Further, although the above embodiment has been described based on one example where the first damping member 41 is installed in the supported portion 33, the installation position may be appropriately modified. For example, the first damping member 41 may be installed in a coupling site of the extension portion 32 with respect to the movable lens holding member body 31.

Although the present invention has been fully described by way of example with reference to the accompanying drawings, it is to be understood that various changes and modifications will be apparent to those skilled in the art.

## Claims

1. A lens barrel comprising:
a barrel body (10);
a first guide shaft (2) held by the barrel body;
a movable lens holding member (3) movable along the first guide shaft (2) while holding at least one lens (31a); and
a first damping member (41) for damping vibration of the first guide shaft (2) with respect to the movable lens holding member (3) occurring during movement of the movable lens holding member (3) along the first guide shaft (2),
wherein
the barrel body (10) is provided with an actuator (15) which drives the movable lens holding member (3), and an anti-rotation member (16) which prevents a rotational movement of the movable lens holding member (3) about the first guide shaft (2),
the movable lens holding member (3) is provided with a first supported portion (331) to be fit to the first guide shaft (2), and a second supported portion (332) to be fit to the first guide shaft (2), and
the first damping member (41) is made of a porous material having elasticity and installed at a position between the first supported portion (331.) and the second supported portion (332) in such a manner as to come into contact with the movable lens holding member (3) and the first guide shaft (2).
wherein the first damping member (41) has a generally plate-like shape fitted in the damping member installation section (333), the damping member installation section (333) being part of the first supported portion (331).

2. The lens barrel as recited in claim 1, wherein
the movable lens holding member (3) comprises a tubular-shaped movable lens holding member body (31) holding the at least one lens, and an extension portion (32) provided to protrudingly extend toward a first side in an axial direction of the movable lens holding member body from a first-side one of axially opposite edge faces of the movable lens holding member body,
and wherein
the first supported portion (331) is formed in the movable lens holding member body, and the second supported portion (332) is formed in the extension portion, and
the first damping member (41) is installed in a coupling site of the extension portion with respect to the movable lens holding member body.

3. The lens barrel as recited in claim 1 or 2, wherein
the first guide shaft (2) has a cross-sectionally circular shape, and
the first damper member (41) comprises a contact portion (41a) in contact with the first guide shaft, the contact portion having a planar shape in a state before contact with the first guide shaft.

4. The lens barrel as recited in any one of claims 1 to 3, wherein the movable lens holding member (3) comprises a first damper member-installation section (1333) in which the first damper member (41) is installed, the first damper member-installation section comprising a first installation sub-section (1333a) formed to extend along the first guide shaft (2) in opposed relation to the first guide shaft, and a second installation sub-section (1333b) formed to extend from the first installation sub-section along the first guide shaft, the second installation sub-section being formed in a depressed state with respect to the first installation sub-section so as to receive therein an end (141) of the first damping member.

5. The lens barrel as recited in any one of claims 1 to 4, which further comprises a second damping member (42) for damping vibration of the anti-rotation member (16) with respect to the movable lens holding member (3), wherein
the anti-rotation member is comprised of a second guide shaft (16) disposed approximately parallel to the first guide shaft (2), and
the movable lens holding member has a second guide shaft-receiving section (311) which movably receives therein the second guide shaft and is rotationally stopped by the received second guide shaft,
and wherein the second damping member is installed between the second guide shaft and an inner wall surface of the second guide shaft-receiving section.

6. The lens barrel as recited in claim 5, wherein the second damping member (42) is installed between the second guide shaft and the inner wall surface of the second guide shaft-receiving section oriented in a direction orthogonal to a line connecting the first guide shaft (2) and the second guide shaft (16).

7. The lens barrel as recited in claim 5 or 6, wherein the second damper member (42) is formed of a porous material having elasticity.

## Patentansprüche

1. Objektivtubus, umfassend:
einen Tubuskörper (10);
eine erste Führungswelle (2), die durch den Tubuskörper gehalten wird;
ein bewegliches Linsenhalteetement (3), das entlang der ersten Führungswelle beweglich ist, während es zumindest eine Linse (31a) hält; und
ein erstes Dämpfungselement (41) zum Dämpfen von Vibration der ersten Führungswelle (2) bezüglich des beweglichen Linsenhalteelements (3), die bei der Bewegung des beweglichen Linsenhalteelements (3) entlang der ersten Führungswelle (2) auftritt,
wobei
der Tubuskörper (10) mit einem Aktuator (15), der das bewegliche Linsenhalteelement (3) antreibt, und einem Drehblockierelement (16) versehen ist, das eine Drehbewegung des bewegliche Linsenhalteelements (3) um die erste Führurigswelle (2) verhindert, und
das bewegliche Linsenhalteelement (3) mit einem ersten getragenen Abschnitt (331), der an die erste Führungswelle (2) gefügt werden soll, und einem zweiten getragenen Abschnitt (332) versehen ist, der an die erste Führungswelle (2) gefügt werden soll, und
das erste Dämpfungselement (41) aus einem porösen Material, das Elastizität aufweist, gefertigt und an einer Position zwischen dem ersten getragenen Abschnitt (331) und dem zweiten getragenen Abschnitt (332) derart eingebaut ist, dass es mit dem beweglichen Linsenhalteelement (3) und der ersten Führungswelle (2) in Kontakt kommt, und
wobei das erste Dämpfungselement (41) eine allgemein plattenartige Form aufweist, die in den Dämpfungselementeinbauabschnitt (333) gefügt ist, wobei der Dämpfungselementeinbauabschnitt (333) Teil des ersten getragenen Abschnitts ist.

2. Objektivtubus nach Anspruch 1, wobei
das bewegliche Linsenhalteelement (3) einen rohrförmigen beweglichen Linsenhalteelementkörper (31), der zumindest eine Linse hält, und einen Erstreckungsabschnitt (32) umfasst, der so vorgesehen ist, dass er sich zu einer ersten Seite in einer Axialrichtung des beweglichen Linsenhalteelementkörpers vorragend von einer von axial gegenüberliegenden Kantenflächen des beweglichen Linsenhafteelementkörpers der ersten Seite erstreckt,
und wobei
der erste getragene Abschnitt (331) in dem beweglichen Linsenhafteelementkörper gebildet ist, und der zweite getragene Abschnitt in dem (332) Erstreckungsabschnitt gebildet ist, und
das erste Dämpfungselement (41) an einem Kopplungsort des Erstreckungsabschnitts bezüglich des beweglichen Linsenhalteelementkörpers eingebaut ist.

3. Objektivtubus nach Anspruch 1 oder 2, wobei
die erste Führungswelle (2) eine im Querschnitt kreisförmige Form aufweist, und
das erste Dämpferelement (41) einen Kontaktabschnitt (41a) aufweist, der mit der ersten Führungswelle in Kontakt ist, wobei der Kontaktabschnitt eine planare Form in einem Zustand vor dem Kontakt mit der ersten Führungswelle aufweist.

4. Objektivtubus nach einem der Ansprüche 1 bis 3, wobei das bewegliche Linsenhalteelement (3) einen ersten Dämpferelementeinbauabschnitt (1333) umfasst, in dem das erste Dämpferelement (41) eingebaut ist, wobei der erste Dämpferelementeinbauabschnitt einen ersten Einbauunterabschnitt (1333a), der so ausgebildet ist, dass er sich entlang der ersten Führungswelle (2) in gegenüberliegender Beziehung zur ersten Führungswelle erstreckt, und einen zweiten Einbauunterabschnitt (1333b) umfasst, der so ausgebildet ist, dass er sich von dem ersten Einbauunterabschnitt entlang der ersten Führungswelle erstreckt, wobei der zweite Einbauunterabschnitt in einem bezüglich des ersten Einbauunterabschnitts heruntergedrückten Zustand ausgebildet ist, um darin ein Ende (141) des ersten Dämpfungselements aufzunehmen.

5. Objektivtubus nach einem der Ansprüche 1 bis 4, das des Weiteren ein zweites Dämpfungselement (42) zum Dämpfen von Vibration des Drehblocklerelements (16) bezüglich des beweglichen Linsenhalteelements (3) umfasst, wobei
das Drehblockierelement aus einer zweiten Führungswelle (16) besteht, die ungefähr parallel zur ersten Führungswelle (2) angeordnet ist, und
das bewegliche Linsenhalteelement einen zweiten Führungswellenaufnahmeabschnitt (311) aufweist, der die zweite Führungswelle beweglich darin aufnimmt und in der Drehung durch die aufgenommene zweite Führungswelle gestoppt wird,
und wobei das zweite Dämpfungselement zwischen der zweiten Führungswelle und einer Innenwandfläche des zweiten Führungswellenaufnahmeabschnitts eingebaut ist.

6. Objektivtubus nach Anspruch 5, wobei das zweite Dämpfungselement (42) zwischen der zweiten Führungswelle und der Innenwandfläche des zweiten Führungswellenaufnahmeabschnitts in einer Richtung orientiert eingebaut ist, die orthogonal zu einer Linie ist, die die erste Führungswelle (2) und die zweite Führungswelle (16) verbindet.

7. Objektivtubus nach Anspruch 5 oder 6, wobei das zweite Dämpferelement (42) aus einem porösen Material gebildet ist, das Elastizität aufweist.

## Revendications

1. Tube de lentille comprenant :
un corps de tube (10);
un premier arbre de guidage (2) retenu par le corps de tube ;
un membre de retenue de lentille mobile (3) déplaçable le long du premier arbre de guidage (2) en retenant au moins une lentille (31a) ; et
un premier élément d'amortissement (41) pour amortir une vibration de l'arbre de guidage (2) par rapport au membre de retenue de lentille mobile (3), laquelle vibration se produit pendant le déplacement du membre de retenue de lentille mobile (3) le long du premier arbre de guidage (2),
dans lequel
le corps de tube (10) est muni d'un actionneur (15), qui entraîne le membre de retenue de lentille mobile (3), et d'un élément anti-rotation (16), qui empêche un mouvement rotatif du membre de retenue de lentille mobile (3) autour du premier arbre de guidage (2),
le membre de retenue de lentille mobile (3) est muni d'une première partie de support (331) à s'adapter au premier arbre de guidage (2), et d'une deuxième partie de support (332) à s'adapter au premier arbre de guidage (2), et
le premier élément d'amortissement (41) est fabriqué en un matériau poreux ayant une élasticité et est installé à une position entre la première partie de support (331) et la deuxième partie de support (332) de telle façon qu'il vienne en contact avec le membre de retenue de lentille mobile (3) et le premier arbre de guidage (2),
dans lequel le premier élément d'amortissement (41) a une forme générale de plaque adaptée à la section d'installation (333) de l'élément d'amortissement, la section d'installation (333) de l'élément d'amortissement faisant partie de la première partie de support (331).

2. Tube de lentille selon la revendication 1, dans lequel
le membre de retenue de lentille mobile (3) comprend un corps de membre de retenue de lentille mobile en forme de tube, qui retient l'au moins une lentille, et une partie d'extension (32) prévue pour s'étendre de manière protubérante vers un premier côté dans une direction axiale du corps de membre de retenue de lentille mobile à partir d'un premier côté de faces latérales axialement opposées du corps de membre de retenue de lentille mobile,
et dans lequel
la première partie de support (331) est formée dans le corps de membre de retenue de lentille mobile et la deuxième partie de support (332) est formée dans la partie d'extension, et
le premier élément d'amortissement (41) est installé à un point de couplage de la partie d'extension par rapport au corps de membre de retenue de lentille mobile.

3. Tube de lentille selon la revendication 1 ou la revendication 2, dans lequel
le premier arbre de guidage (2) a une section transversale en forme circulaire, et le premier élément d'amortissement (41) comprend une partie de contact (41a) en contact avec le premier arbre de guidage, la partie de contact ayant une forme planaire dans un état avant le contact avec le premier arbre de guidage.

4. Tube de lentille selon l'une quelconque des revendications 1 à 3, dans lequel le membre de retenue de lentille mobile (3) comprend une section d'installation (1333) du premier élément d'amortissement, dans laquelle le premier élément d'amortissement (41) est installé, la section d'installation (1333) du premier élément d'amortissement comprenant un première sous-section d'installation (1333a) formée de sorte qu'elle s'étend le long du premier arbre de guidage (2) en relation opposée au premier arbre de guidage, et une deuxième sous-section d'installation (1333b) formée de sorte qu'elle s'étend à partir de la première sous-section d'installation le long du premier arbre de guidage, la deuxième sous-section d'installation étant formée dans un état enfoncé par rapport à la première sous-section d'installation pour recevoir une extrémité (141) du premier élément d'amortissement dans celle-ci,

5. Tube de lentille selon l'une quelconque des revendications 1 à 4, qui comprend en outre un deuxième élément d'amortissement (42) pour amortir une vibration de l'élément anti-rotation (16) par rapport au membre de retenue de lentille mobile (3), dans lequel l'élément anti-rotation comprend un deuxième arbre de guidage (16) disposé approximativement de manière parallèle au premier arbre de guidage (2), et le membre de retenue de lentille mobile comprend une deuxième section de réception (311) de l'arbre de guidage, qui reçoit de manière mobile le deuxième arbre de guidage dans celle-ci et qui est arrêtée en rotation par le deuxième arbre de guidage reçu, et dans lequel le deuxième élément d'amortissement est installé entre le deuxième arbre de guidage et une surface de paroi intérieure de la section de réception du deuxième arbre de guidage.

6. Tube de lentille selon la revendication 5, dans lequel le deuxième élément d'amortissement (42) est installé entre le deuxième arbre de guidage et la surface de paroi intérieure de la section de réception du deuxième arbre de guidage orientée dans une direction orthogonale à une ligne, qui relie le premier arbre de guidage (2) et le deuxième arbre de guidage (16).

7. Tube de lentille selon la revendication 5 ou la revendication 6, dans lequel le deuxième élément d'amortissement (42) est formé en un matériau poreux ayant une élasticité.
